# EUROPEAN PATENT APPLICATION

(11) **EP 3 859 023 A1**
(43) Date of publication of application: **04.08.2021**
(21) Application number: 20154258.6
(22) Date of filing: 29.01.2020
(51) Int. Cl.: C22C 21/02, B23K 1/00, B32B 15/06

(54) **ALUMINIUM ALLOY MULTI-LAYERED BRAZING SHEET MATERIAL FOR FLUXFREE BRAZING**

(71) Applicant: Aleris Rolled Products Germany GmbH, 56070 Koblenz (DE)
(72) Inventor: The designation of the inventor has not yet been filed
(74) Representative: Dey, Michael

(57) **Abstract**

The invention relates to an aluminium alloy multi-layered brazing sheet product for brazing in an inert-gas atmosphere without a flux, comprising a core layer made of a 3xxx alloy comprising 0.20-0.75 wt.% Mg, and provided with a covering clad layer comprising 2-5 wt.% Si on one or both sides of said 3xxx alloy core layer and a Al-Si brazing clad layer comprising 7-13 wt.% Si positioned between the 3xxx alloy core layer and the covering clad layer, wherein the covering clad layer and the core layer are of aluminium alloys having a solidus temperature higher than the liquidus temperature of the Al-Si brazing clad layer, wherein the covering clad layer has a thickness X₁ and the Al-Si brazing clad layer has a thickness X₂ and wherein X₂ ≥ 2X₁. The invention further relates to the use of an aluminium alloy multi-layered brazing sheet product in a fluxfree controlled atmosphere brazing (CAB) operation to produce a heat exchanger apparatus

## Description

### FIELD OF THE INVENTION

The invention relates to an aluminium alloy multi-layered brazing sheet product or material for brazing in an inert gas atmosphere without a flux ("CAB"), comprising a core layer made of a 3xxx alloy and provided with a covering clad layer comprising 2-5 wt.% Si on one or both sides of the core layer and a Al-Si brazing clad layer comprising 6-13 wt.% Si positioned between the core layer and the covering clad layer, and wherein the covering clad layer and the core layer are of aluminium alloys having a solidus temperature higher than the liquidus temperature of the Al-Si brazing clad layer. The invention further relates to a brazed assembly manufactured in a brazing operation, the brazed assembly comprising various components and at least one component being made from the aluminium alloy multi-layered brazing sheet material according to this invention.

### BACKGROUND TO THE INVENTION

Substrates of aluminium or aluminium alloy in the form of sheet or extrusion, are used to make shaped or formed products. In some of these processes parts of (shaped) aluminium comprising substrates are interconnected. One end of a substrate may be interconnected with the other end or one substrate may be assembled with one or more other substrates. This is commonly done by brazing. In a brazing process, a brazing filler metal or brazing alloy or a composition producing a brazing alloy upon heating is applied to at least one portion of the substrate to be brazed. After the substrate parts are assembled, they are heated until the brazing filler metal or brazing alloy melts. The melting point of the brazing material is lower than the melting point of the aluminium substrate or aluminium core sheet.

Brazing sheet products find wide applications in heat exchangers and other similar equipment. Conventional brazing products have a core of rolled sheet, typically, but not exclusively an aluminium alloy of the 3xxx-series, having on at least one surface of the core sheet an aluminium brazing clad layer (also known as an aluminium cladding layer). The aluminium brazing clad layer is made of a 4xxx-series alloy comprising silicon at its main alloying constituent in an amount in the range of 4-20 wt.%. The aluminium brazing clad layer may be coupled or bonded to the aluminium core alloy in various ways known in the art, for example by means of roll bonding, cladding spray-forming or semi-continuous or continuous casting processes.

These aluminium brazing clad layers have a liquidus temperature typically in the range of about 540-615°C.

European patent EP-2477783-B1 (Granges) discloses a multi-layered aluminium alloy brazing sheet product consisting of: a core material that on either one or both sides has an intermediate layer consisting of an Al-Si braze alloy interposed between the core and a thin covering layer on top of the intermediate layer, wherein the core material and the covering layer has a higher melting temperature than the Al-Si braze alloy, the covering layer consisting of, in wt.%, Bi 0.01-1.0%, Mg ≤0.05%, preferably ≤0.01%, more preferably 0%, and Mn ≤1.0%, Cu ≤1.2%, Fe ≤1.0%, Si ≤4.0%, and most preferably ≤0.9%, Ti ≤0.1%, Zn ≤6%, Sn ≤0.1%, In ≤0.1%, and unavoidable impurities and balance aluminium, and wherein the core consists of, in wt.%, Mn 0.5-2.0%, Cu ≤1.2%, Fe ≤1.0%, Si ≤1.0%, Ti ≤0.2%, Mg ≤2.5%, preferably 0.03-2.0%, Zr, Cr, V and/or Sc in total ≤0.2%, and unavoidable impurities and balance aluminium.

### DESCRIPTION OF THE INVENTION

As will be appreciated herein below, except as otherwise indicated, aluminium alloy designations and temper designations refer to the Aluminium Association designations in Aluminium Standards and Data and the Registration Records, as published by the Aluminium Association in 2019, and frequently updated, and are well known to the person skilled in the art. The temper designations are laid down in European standard EN515.

For any description of alloy compositions or preferred alloy compositions, all references to percentages are by weight percent unless otherwise indicated.

The term "up to" and "up to about", as employed herein, explicitly includes, but is not limited to, the possibility of zero weight-percent of the particular alloying element to which it refers. For example, up to about 0.20% Cr may include an aluminium alloy having no Cr.

It is an object of the invention to provide an improved brazing sheet product for brazing in an inert gas atmosphere without a flux. It is an object of the invention to provide at least an alternative multi-layered brazing sheet product for brazing in an inert gas atmosphere to the product disclosed in EP-247783-B1.

These and other objects and further advantages are met or exceeded by the present invention providing an aluminium alloy multi-layered brazing sheet product for brazing in an inert-gas atmosphere without a flux, comprising a core layer made of a 3xxx alloy comprising 0.20-0.75 wt.% Mg, and provided with a covering clad layer comprising 2-5 wt.% Si on one or both sides of said 3xxx alloy core layer and a Al-Si brazing clad layer comprising 7-13 wt.% Si positioned between the 3xxx alloy core layer and the covering clad layer, wherein the covering clad layer and the core layer are of aluminium alloys having a solidus temperature higher than the liquidus temperature of the Al-Si brazing clad layer, wherein the covering clad layer has a thickness X₁ and the Al-Si brazing clad layer has a thickness X₂ and wherein X₂ ≥ 2X₁.

The 3xxx alloy core layer comprises 0.20%-0.75% Mg and preferably 0.20-0.60% Mg. In one embodiment it has 0.20% to 0.30% Mg. In another embodiment it has 0.40% to 0.55% Mg.

In accordance with the invention it has been found that the thin covering layer and the core layer are comprised of aluminium alloys having a solidus temperature higher than the liquidus temperature of the Al-Si brazing clad layer so that the molten brazing material during a subsequent brazing operation at a temperature between said liquidus temperature and said solidus temperature is to cause said Al-Si alloy brazing clad layer to melt down while keeping said thin covering clad layer solid to prevent or at least limit oxidation of the brazing material being melted, and then cause the Al-Si alloy brazing material to seep, due to volumetric expansion, through segregation portions of said thin covering clad layer onto a surface of said thin covering clad layer and spread over the surface of said thin covering clad layer to form an emerging surface resulting in a brazed joint. The covering clad layer will eventually dissolve into the molten filler material. The presence of Mg in the Al-Si brazing clad layer facilitates the break-up of the oxide layer on the surface of the brazing sheet product prior to brazing when Mg evaporates at the surface. However, a too high Mg content in the Al-Si brazing clad layer creates an undesired Mg-oxide layer prior to brazing and adversely affects the flow of molten material during brazing. The Al-Si brazing clad layer may comprise a restricted amount of Mg and by having a controlled purposive amount of Mg in the 3xxx core layer, some of the Mg will diffuse with time into the Al-Si brazing clad layer during the heat-up cycle of a brazing operation and provides a delayed evaporation of Mg. Thereby the formation of excessive Mg-oxide at an early stage of the brazing operation is avoided and leading to an improved brazing performance in an inert-gas atmosphere without a flux.

In an embodiment the aluminium core alloy layer is made from a 3XXX-series aluminium alloy consisting of, in wt.%:
0.5% to 1.8% Mn, preferably 0.6% to 1.5%, and more preferably 0.8% to 1.3%;
0.20% to 0.75% Mg, preferably 0.20% to 0.60%;
up to 1.1% Cu, and preferably up to 0.15% or in a range of 0.15% to 1.1%, and preferably 0.20% to 0.9%, and more preferably 0.20% to 0.60%;
up to 0.2% Si, and preferably < 0.10%;
up to 0.7% Fe, preferably up to 0.5%, and more preferably in a range of 0.05% to 0.35%;
up to 0.3% Cr, preferably up to 0.20%, and more preferably up to 0.09%, and most preferably up to 0.04%;
up to 0.3% Sc, preferably up to 0.25%;
up to 0.3% Zr and/or V, preferably up to 0.09%, and more preferably up to 0.04%;
up to 0.25% Ti, preferably 0.01% to 0.20%, more preferably 0.01% to 0.12%;
up to 1.2% Zn, preferably up to 0.5%, and most preferably up to 0.2%;
balance aluminium and impurities. Typically, impurities are each up to 0.05% maximum and in total about 0.2% maximum, and preferably in total not exceeding about 0.15%.

In an embodiment the covering clad layer is free of wetting elements or elements modifying the surface tension of a molten Al-Si alloy, selected from the group of Ag, Be, Bi, Ca, Ce, La, Li, Na, Pb, Se, Sb, Sr, Th, and Y. With "free" is meant that no purposeful addition of Ag, Be, Bi, Ca, Ce, La, Li, Na, Pb, Se, Sb, Sr, Th, or Y is made to the chemical composition but that due to impurities and/or leaking from contact with manufacturing equipment, trace quantities of may nevertheless find their way into the covering material layer. In practice this means that the amount present of each of these defined elements, if present, is up to about 0.005%, typically less than about 0.001%. For example, less than 10 ppm Sr, and preferably less than 5 ppm Sr, is an example of a trace quantity. And less than 10 ppm Na, and preferably less than 3 ppm Na, is another example of a trace quantity.

The covering clad layer is preferably free from Mg, meaning that the level is below about 0.05%, preferably below about 0.03%, and more preferably below 0.01%. With "free" is meant that no purposeful addition of Mg is made to the chemical composition but that due to impurities and/or leaking from contact with manufacturing equipment, trace quantities of may nevertheless find their way into the covering material layer.

In an embodiment the covering clad layer is a Mg-free aluminium alloy and comprising, in wt.%,

| | |
|---|---|
| Si | 2% to 5%, preferably 2.5% to 4.0%, more preferably 3.0% to 3.9%; |
| Fe | up to 0.5%, preferably up to 0.3%; |
| Mn | up to 0.2%, preferably up to 0.10%; |
| Cu | up to 0.1%, preferably up to 0.05%; |
| Zn | up to 0.4%, preferably up to 0.2%; |
| Ti | up to 0.1%, preferably up to 0.05%; |

inevitable impurities, each <0.05%, total <0.15%, and preferably each <0.02% and total <0.05%, balance aluminium.

In an embodiment the covering clad layer is a Mg-free aluminium alloy consisting of, in wt.%, Si 2% to 5%, Fe up to 0.5%, Mn up to 0.2%, Cu up to 0.1%, Zn up to 0.4%, Ti up to 0.1%, inevitable impurities, each <0.05% and total <0.15%, balance aluminium, and with preferred narrower ranges as herein described and claimed.

In an embodiment of the invention, the Al-Si brazing clad layer has the following composition, comprising of, in wt.%,

| | |
|---|---|
| Si | 7% to 13%, preferably 10%-13%, more preferably 11 to 13%; |
| Mg | up to 0.5%, preferably 0.02% to 0.5%, and more preferably 0.02% to 0.20%; |
| Fe | up to 0.7%, preferably up to 0.5%; |
| Cu | up to 0.3%, preferably up to 0.1%; |
| Mn | up to 0.8%, preferably up to 0.2%; |
| Zn | up to 2%, preferably up to 0.3%; |
| Ti | up to 0.25%; |

balance aluminium, and unavoidable impurities each <0.05%, total <0.2%.

In a particular embodiment the Al-Si brazing clad layer may further comprise up to 0.3% Bi, preferably 0.1 % to 0.3%, more preferably 0.11% to 0.20%, to enhance joint formation during brazing.

In an embodiment of the invention, the Al-Si brazing clad layer has the following composition, consisting of, in wt.%,

| | |
|---|---|
| Si | 7% -13%, preferably 10%-13%, more preferably 11-13%; |
| Mg | up to 0.5%, preferably 0.02% to 0.5%, and more preferably 0.02% to 0.20%; |
| Fe | up to 0.7%, preferably up to 0.5%; |
| Cu | up to 0.3%, preferably up to 0.1%; |
| Mn | up to 0.8%, preferably up to 0.2%; |
| Zn | up to 2%, preferably up to 0.3%; |
| Bi | up to 0.3%, preferably 0.1% to 0.3%; |
| Ti | up to 0.25%; |

balance aluminium, and unavoidable impurities each <0.05%, total <0.2%.

In an embodiment of the aluminium alloy multi-layered brazing sheet material according to this invention the 3xxx alloy core layer is provided on both sides with the covering clad layer and the Al-Si brazing clad layer. When both sides of the 3xx alloy core layer are clad in the same manner, the brazing sheet material consists of a five-layer configuration.

In an embodiment the aluminium alloy multi-layered brazing sheet material is devoid or free from of an aluminium alloy layer interposed between the 3xxx alloy core layer and the Al-Si brazing clad layer as this would hinder the diffusion of the Mg from the 3xxx alloy core layer into the Al-Si brazing clad layer.

The aluminium alloy multi-layered brazing sheet material according to this invention can be manufactured via various techniques. For example, by means of roll bonding as is well known in the art, and which method is preferred. The process may generally comprise the following steps:
- casting the different aluminium alloys to obtain rolling blocks;
- scalping of the blocks on either side to remove surface segregation zones originating from the casting process and to improve product flatness;
- preheating of the brazing material blocks at 400°C to 550°C;
- hot rolling of the blocks forming the covering layer and the Al-Si brazing clad layer until the desired thickness to provide multiple hot rolled clad liners;
- alternatively hot rolling the blocks of the covering layer and the Al-Si brazing clad layer to intermediate thickness and stacking the two materials at intermediate thickness and further hot rolling the stack to provide a hot rolled clad liner of required thickness composed of the two layers;
- optionally homogenizing the aluminium core alloy block at 500°C to 630°C for at least 1 hour, preferably 1 to 20 hours;
- assembling the core alloy block with at least on one face, optionally on both faces, the rolled clad liner(s) to obtain a sandwich;
- preheating the sandwich at 400°C to 550°C;
- hot rolling the sandwich until an intermediate thickness, for example 2 to 10 mm; cold rolling the hot rolled sandwich until the desired final thickness to obtain a multi-layered brazing sheet product;
- optionally annealing at 200°C to 480°C to obtain a multi-layered brazing sheet product of the desired temper, for example O-temper, H1x-temper, H2x-temper or H3x-temper.

Alternatively, on a less preferred basis, one or more of the covering clad layer and the Al-Si brazing clad layer can be applied onto the 3xxx alloy core layer by means of thermal spraying techniques. Or alternatively, the core aluminium alloy layer and the Al-Si alloy brazing clad layer can be manufactured by means of casting techniques, for example as disclosed in international patent document WO-2004/112992, where after the covering clad layer can be applied by means of for example roll bonding or thermal spraying techniques.

In an embodiment the aluminium alloy multi-layered brazing sheet material thus obtained is treated with an alkaline or acidic etchant before the brazing process to remove a surface oxide film to facilitate the fluxless CAB brazing operation.

Preferably, the outer-surface of the aluminium alloy multi-layered brazing sheet material is treated with an acidic etchant. The acidic etchant preferably comprises 10 to 25, more preferably 12 to 16, for example 14 g/l of H₂SO₄ and 0.5 to 5, more preferably 1 to 3, for example 2 g/l of HF (5%).
The acidic etchant may comprise at least one of the following mineral acids: H₂SO₄, H₃PO₄, HCI, HF and/or HNO₃. Preferably, the acidic etchant is a mixture of H₂SO₄ and HF. The acidic etchant is generally in the form of a solution and the mineral acid content is generally from 0.5 to 20 wt.%.

According to another embodiment the etchant may be alkaline. The alkaline etchant may comprise at least one of the following: NaOH and/or KOH. The alkaline etchant is generally in the form of a solution and the alkaline content is generally from 0.5 to 20 wt.%.
The alkaline etchant may further comprise surfactants (for example, anionic surfactants such as alkylbenzene sulfonates, alkyl sulfates, alkyl ether sulfates; cationic surfactants such as mono alkyl quaternary systems; non-ionic surfactants such as with ester, ether or amide bonding (for example glycol esters); or amphoteric surfactants such as imidazoline derivatives or polypeptides) or complexing agents (for example sodium gluconate, sorbitol, mucic acid or Arabic gum).
The alkaline etchant generally needs to be rinsed with an acid, for example nitric or sulfuric acid.

The surface treatment with an etchant generally lasts from 1 second to 5 minutes, preferably from 3 to 80 sec, more preferably from 5 to 50 sec.

The temperature during this surface treatment is generally from 20°C to 100°C, preferably from 30°C to 80°C, more preferably 50°C to 80°C.

During the surface treatment, the amount of removed aluminium of the clad outer layer side is 1 to 1000 mg/m² per side, preferably 5 to 500 mg/m² per side, more preferably 5 to 300 mg/m² per side.

The aluminium alloy multi-layered brazing sheet material according to the invention has a typical thickness at final gauge in the range of about 0.05 mm to 4 mm, and preferably about 0.2 mm to 2 mm, and more preferably about 0.2 mm to 1.5 mm.

In an embodiment each covering clad layer has a thickness which is about 0.5% to 10%, preferably 0.5% to 5%, of the entire thickness of the multi-layered brazing sheet, and each Al-Si brazing clad layer has a thickness which is about 3% to 25%, preferably about 4% to 15%, of the entire thickness of the aluminium alloy multi-layered brazing sheet.

In an embodiment the covering clad layer has a thickness in the range of 4 µm to 80 µm, preferably in a range of 5 µm to 50 µm.

It is important to keep the thickness of the covering clad layer thin compared to the thickness of the Al-Si brazing clad layer. The covering clad layer has a thickness X₁ and the Al-Si brazing clad layer has a thickness X₂ and the thickness ratio (X₂ to X₁) of the Al-Si alloy brazing clad layer and the covering clad layer is 2 or more to 1. In an embodiment the thickness ratio is 2.5 or more to 1, and preferably X₂ ≥ 3.X₁, for example the thickness ratio is 2.5 to 1, or 3 to 1, or 3.5 to 1.

Preferably the total of the thicknesses of the covering clad layer and the Al-Si brazing clad layer applied on a side of the core alloy layer are in a range of about 5% to 25%, preferably 5% to 15%, of the entire thickness of the multi-layered brazing sheet material.

In an embodiment of the invention the aluminium alloy multi-layered brazing sheet material is provided in an O-temper, and which is fully annealed.

In an embodiment of the invention the aluminium alloy multi-layered brazing sheet material is provided in a H3x-temper, H2x-temper or H1x-temper, and wherein x is 1, 2, 3, 4, 5, 6, 7 or 8, such as for example the H14, H18, H22, H24 and H26 temper.

As an particular example the aluminium alloy multi-layered brazing sheet material is provided in an H24, a H116 or O-temper.

In a further aspect of the invention it relates to the use of the aluminium alloy multi-layered brazing sheet material or product for the production by means of a fluxfree controlled atmosphere brazing (CAB) operation of a heat exchanger, e.g. of a motor vehicle, and as such, the aluminium alloy multi-layered brazing sheet material is suitable for being applied in heat exchangers for powertrain and engine cooling radiators, low temperature radiators, direct air-to-air charge air cooling ("CAC") or intercooling, air-to-water CAC, water-to-air CAC, air-to-refrigerant CAC, refrigerant-to-air CAC, air-to-refrigerant evaporators, air-to-refrigerant condensers, water-to-refrigerant evaporators, water-to-refrigerant condensers, heater cores, exhaust gas cooling, exhaust gas recirculation systems, hybrid cooling system, two-phase cooling systems, oil coolers, fuel coolers, material for battery cooling systems, chillers, cold plates, heat recovery systems, etc.

In a further aspect of the invention there is provided an article comprising at least two formed members, for example formed by means of bending, folding, tube forming or deep drawing, joint to each other in a flux-free controlled atmosphere brazing (CAB) operation, in particular a heat-exchanger of a motor vehicle, incorporating at least the aluminium alloy multi-layered brazing material according to this invention as one of the formed members.

In another aspect of the invention there is provided a method of manufacturing an assembly of brazed components, comprising the steps of, in that order:
(a) providing or forming the components of which at least one is made from an aluminium alloy multi-layered brazing sheet product as herein set out or claimed; and preferably the multi-layered brazing sheet is treated with an alkaline or acidic etchant;
(b) assembling the components into an assembly; and preferably one side of the multi-layered brazing sheet of the invention having the covering clad layer is being kept inside the assembly forming the brazing sheet to constitute a structure, preferably a hollow structure;
(c) brazing the assembly without applying brazing flux in an inert gas atmosphere, e.g. argon or nitrogen, at a brazing temperature, typically at a temperature in a range of about 540°C to 615°C, for example at about 590°C or at about 600°C, for a period long enough for melting and spreading of the Al-Si brazing material, for example a dwell time of about 1 to 10 minutes, preferably 1 to 6 minutes, typically at around about 2 or 4 minutes, to form a fillet between the filler material and at least one other component; and wherein the oxygen content of the dry inert gas atmosphere is controlled to a level as low as possible, preferably below 200 ppm, and more preferably below 100 ppm, and more preferably below 40 ppm; and
(d) cooling of the brazed assembly, typically to below 100°C; e.g. to ambient temperature.

Ideally, when assembling the components into an assembly suitable for joining by brazing, one side of the multi-layered brazing sheet product of the invention having the thin covering clad layer is being kept inside the assembly forming the brazing sheet to constitute a structure. While using the brazing sheet product according to this invention there is no requirement to apply a brazing flux in order to obtain a good joint following the brazing operation.

In a preferred embodiment the brazing inert gas atmosphere during the brazing operation should be dry, meaning that the dew point is less than minus 40°C, and more preferably of minus 45°C or even lower.

### DESCRIPTION OF THE DRAWING

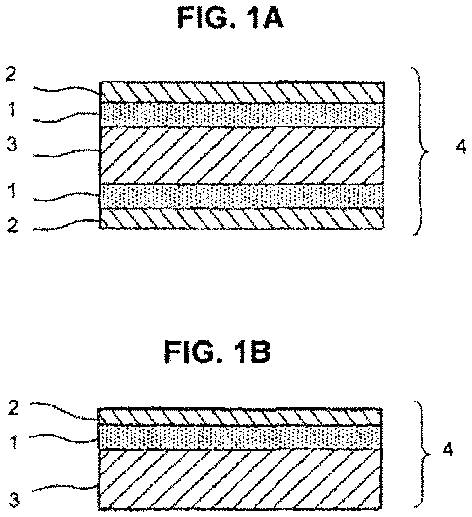

Typical arrangements of the aluminium alloy multi-layered brazing sheet product 4 according to the invention are illustrated in Figs. 1A and 1B.

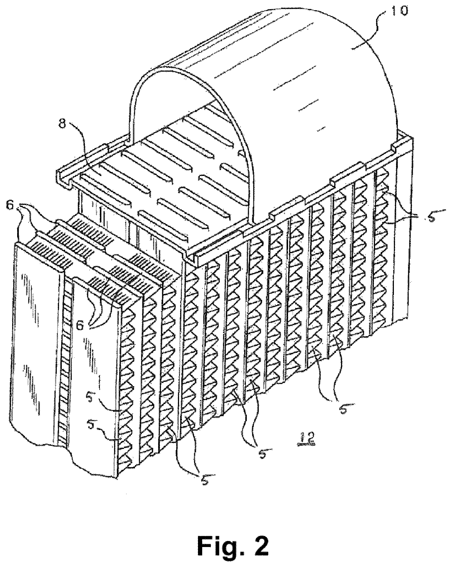

Fig. 2 is an isometric view of a portion of a brazed heat exchanger assembly.

The covering clad layer 2 and the Al-Si alloy brazing clad layer 1 can be applied on both sides or on one side only of the core layer 3 and wherein the covering clad layer 2 forms the outer-layer of the aluminium alloy multi-layered brazing sheet product. When both sides are clad, the multi-layered brazing sheet product has five layers including the core alloy layer as shown in Fig. 1A. When one side is clad with the brazing material, the multi-layered brazing sheet product has a three-layer configuration as shown in Fig. 1B.

As shown in Fig. 2, a brazed aluminium heat exchanger 12 in accordance with the present invention may include a plurality of fluid-carrying tubes 6 made from the multi-layered brazing sheet in accordance with this invention. The ends of the fluid-carrying tubes 6 are open to a header plate 8 and a tank 10 (one end of the fluid-carrying tubes 6, one header plate 8 and one tank 10 are shown in Fig. 2). Coolant is circulated from the tank 10, through the fluid-carrying tubes 6 and into another tank (not shown). As shown, a plurality of cooling fins 7 are disposed between the fluid-carrying tubes 6, in order to transfer heat away therefrom thereby facilitating a heat exchange cooling the fluid therein.

Having now fully described the invention, it will be apparent to one of ordinary skill in the art that many changes and modifications can be made without departing from the spirit or scope of the invention as herein described.

## Claims

1. An aluminium alloy multi-layered brazing sheet product for brazing in an inert-gas atmosphere without a flux, comprising a core layer made of a 3xxx alloy comprising 0.20% to 0.75 wt.% Mg, and provided with a covering clad layer comprising 2 wt.% to 5 wt.% Si on one or both sides of said 3xxx alloy core layer and a Al-Si brazing clad layer comprising 7 wt.% to 13 wt.% Si positioned between the 3xxx alloy core layer and the covering clad layer, wherein the covering clad layer and the core layer are of aluminium alloys having a solidus temperature higher than the liquidus temperature of the Al-Si brazing clad layer, wherein the covering clad layer has a thickness X₁ and the Al-Si brazing clad layer has a thickness X₂ and wherein X₂ ≥ 2X₁.

2. A multi-layered brazing sheet product according to claim 1, wherein the 3xxx alloy core layer comprises 0.20% to 0.60% Mg.

3. A multi-layered brazing sheet product according to claim 1 or 2, wherein the 3xxx alloy core layer comprises 0.20% to 0.30% Mg.

4. A multi-layered brazing sheet product according to claim 1 or 2, wherein the 3xxx alloy core layer comprises 0.40% to 0.55% Mg.

5. A multi-layered brazing sheet product according to any one of claims 1 to 4, wherein the covering clad layer is Bi-free and Li-free.

6. A multi-layered brazing sheet product according to any one of claims 1 to 5, wherein the covering clad layer is Mg-free, Bi-free and Li-free, and comprises, in wt.%,
| | |
|---|---|
| Si | 2% to 5%, preferably 2.5% to 4.0%, more preferably 3.0% to 3.9%; |
| Fe | up to 0.5%; |
| Mn | up to 0.2%; |
| Cu | up to 0.1%; |
| Zn | up to 0.4%; |
| Ti | up to 0.1%; |
inevitable impurities, each <0.05%, total <0.15%, balance aluminium.

7. A multi-layered brazing sheet product according to any one of claims 1 to 6, wherein the 3xxx alloy core layer comprises, in wt.%,
0.5% to 1.8% Mn;
0.20% to 0.75% Mg;
up to 1.1% Cu;
up to 0.2% Si, and preferably < 0.10%;
up to 0.7% Fe;
up to 0.3% Cr;
up to 0.3% Sc;
up to 0.3% Zr and/or V;
up to 0.25% Ti;
up to 1.2% Zn;
unavoidable impurities each up to 0.05% and total up to 0.2%, and balance aluminium.

8. A multi-layered brazing sheet product according to claim 7, wherein the 3xxx alloy core layer has a Cu content up to 0.15%.

9. A multi-layered brazing sheet product according to claim 7, wherein the 3xxx alloy core layer has a Cu content in the range of 0.15% to 1.1 %, and preferably 0.20% to 0.9%.

10. A multi-layered brazing sheet product according to any one of claims 1 to 9, wherein the Al-Si brazing clad layer comprises, in wt.%,
| | |
|---|---|
| Si | 7% to 13%, preferably 10%-13%; |
| Mg | up to 0.5%, preferably 0.02% to 0.5%; |
| Fe | up to 0.7%; |
| Cu | up to 0.3%; |
| Mn | up to 0.8%; |
| Zn | up to 2%; |
| Bi | up to 0.3%; |
| Ti | up to 0.25%; |
balance aluminium and unavoidable impurities each <0.05%, total <0.2%.

11. A multi-layered brazing sheet product according to any one of claims 1 to 10, wherein the multi-layered brazing sheet is surface treated with an alkaline or acidic etchant before a brazing step.

12. A multi-layered brazing sheet product according to any one of claims 1 to 12, wherein the covering clad layer has a thickness X₁ and the Al-Si brazing clad layer has a thickness X₂ and wherein X₂ ≥ 2.5X₁, and preferably X₂ ≥ 3X₁.

13. Process for the production of a braze heat exchanger, comprising the steps of:
- providing at least one aluminium alloy multi-layered brazing sheet product according to any one of claims 1 to 12, and preferably the multi-layered brazing sheet is surface treated with an alkaline or acidic etchant before a brazing step; and
- brazing if a flux-free controlled atmosphere brazing (CAB).

14. Use of an aluminium alloy multi-layered brazing sheet product according to any one of claims 1 to 12 in a flux-free controlled atmosphere brazing (CAB) operation to produce a heat exchanger apparatus.
